# FASCICULE DE BREVET EUROPEEN

(11) **EP 3 210 283 B1**
(45) Date de publication et mention de la délivrance du brevet: **13.05.2020**
(21) Numéro de dépôt: 15791700.6
(22) Date de dépôt: 21.10.2015
(51) Int. Cl.: H02K 5/06, H02K 5/173

(54) **CARTER POUR MOTEUR DE TRACTION DE VEHICULE AUTOMOBILE**
GEHÄUSE EINES FAHRZEUGMOTORS
HOUSING FOR TRACTION MOTOR IN A VEHICLE

(30) Priorité: 23.10.2014 FR 1460183
(43) Date de publication de la demande: 30.08.2017
(73) Titulaire: Renault s.a.s, 92100 Boulogne-Billancourt (FR)
(72) Inventeur: FAVARD, Damien, F-78280 Guyancourt (FR); FORMOSA, Denis, Québec, Québec G6V 3X2 (CA)
(86) Numéro de dépôt international: PCT/FR2015/052824
(87) Numéro de publication internationale: WO 2016/062968

(56) Documents cités:
- FR-A1- 2 934 932
- JP-A- 2002 010 562
- US-A- 3 701 911
- US-A1- 2002 047 382
- US-A1- 2012 206 022
- US-B1- 6 227 822

## Description

L'invention concerne un carter pour moteur de traction de véhicule automobile, notamment pour un moteur électrique de traction.

Un tel carter définit un logement pour recevoir un stator et un rotor du moteur. Plus précisément le carter, cylindrique ou partiellement cylindrique, comprend des parois longitudinales, s'étendant sensiblement suivant une direction longitudinale de l'axe du rotor, et une ou deux parois de fond s'étendant de façon transverse par rapport à la direction longitudinale. Le carter peut comprendre un palier reçu dans une paroi de fond pour supporter l'axe du rotor.

Classiquement, la paroi de fond est plane entre les parois longitudinales et le palier.

Dans le cas d'un moteur de traction, la rotation de l'axe du rotor engendre des vibrations relativement amples et rapides. Il existe un risque de déplacement longitudinal du rotor de façon oscillante. On cherche donc à améliorer la rigidité du carter.

Il est connu de prévoir des nervures de renfort sur la paroi de fond, et il a été envisagé d'en prévoir davantage que dans l'art antérieur, mais cette solution aurait tendance à alourdir le carter.

Le document US2002047382 concerne une structure de boîtier pour petit moteur électrique permettant de s'adapter à différentes épaisseurs du paquet de tôle du stator.

Le document US2012206022 concerne une paroi de fond de machine électrique présentant un support de palier ainsi que des nervures permettant de renforcer la tenue de la paroi aux vibrations.

Le document US6227822 concerne un carter de moteur pour ventilateur domestique, les parois du carter étant bombées et présentant des ouvertures.

Le document US3701911 concerne un carter pour machine électrique, le carter comprenant une paroi de fond bombée définissant des nervures radiales, le palier étant axialement éloigné du bord d'extrémité des parois du carter.

Il existe donc un besoin pour un carter de moteur de traction de véhicule automobile permettant de concilier rigidité, légèreté et compacité.

Il est proposé un carter pour moteur de traction de véhicule automobile d'après la revendication 1. Un tel carter comprend :
- des parois longitudinales définissant un logement s'étendant longitudinalement pour recevoir un stator et un rotor du moteur,
- au moins un palier pour supporter un axe du rotor, cet axe s'étendant longitudinalement dans le logement,
- au moins une paroi de fond s'étendant entre un bord d'extrémité des parois longitudinales et le palier.

La paroi de fond est bombée entre le bord d'extrémité des parois longitudinales et le palier. La paroi de fond définit des nervures s'étendant suivant une composante radiale jusqu'au palier.

Ainsi, la paroi de fond du carter est bombée, ce qui peut permettre de mieux absorber les vibrations et en outre de concevoir des nervures relativement profondes suivant la direction longitudinale. Ces nervures s'étendent jusqu'au palier, permettant ainsi une meilleure absorption des vibrations liées à la rotation du rotor.

La paroi de fond n'est donc pas plane, sur au moins une plage angulaire donnée et avantageusement sur 360°, entre le bord d'extrémité des parois longitudinales et le palier. Dit autrement, la paroi de fond comprend des portions de surface définissant un rayon de courbure fini.

L'invention n'est pas limitée à un rayon de courbure fini pour toute portion de surface entre le palier et le bord d'extrémité des parois longitudinales. On pourrait prévoir que la paroi de fond définisse des surfaces planes, pourvu que la paroi de fond définisse aussi des surfaces courbes, avec un rayon de courbure fini, entre le palier et le bord d'extrémité des parois longitudinale en regard du palier.

Les nervures peuvent s'étendre radialement de façon rectiligne, ou non, pourvu que les nervures s'étendent suivant une ou plusieurs directions dont au moins une présente une composante radiale non nulle. Par exemple, les nervures peuvent s'étendre suivant des spirales, suivant des formes de jet d'eau d'un arrosoir de jardin tournant, suivant des portions d'arcs de cercles se croisant ou non, ou autre. L'invention n'est donc pas limitée à une forme particulière de nervure.

Avantageusement, les nervures peuvent s'étendre jusqu'au bord d'extrémité des parois longitudinales, mais on peut bien entendu prévoir des nervures ayant une extrémité plus centrale que le bord d'extrémité des parois longitudinales. Ceci peut permettre de limiter l'encombrement du carter.

Ainsi, les nervures peuvent avantageusement s'étendre entre une extrémité centrale au niveau du palier et une extrémité périphérique séparée du centre de l'axe d'une distance comprise entre 60% et 100%, avantageusement entre 75% et 100%, de la distance entre le centre de l'axe et le bord d'extrémité des parois longitudinales.

Avantageusement, la paroi de fond peut définir un renfoncement central au niveau du palier. Dit autrement, la paroi de fond atteint un extrémum suivant la direction longitudinale entre la paroi longitudinale et le palier. Ceci permet d'améliorer la rigidité.

Alternativement, l'extrémum peut être atteint au niveau du palier.

L'axe du rotor s'étend longitudinalement dans le logement. Cet axe peut s'étendre au-delà du bord d'extrémité des parois longitudinales et/ou au-delà du palier, ou non.

Le bord d'extrémité des parois longitudinales peut avantageusement être circonscrit dans un seul plan, avantageusement normal à la direction longitudinale.

Dans un mode de réalisation avantageux, le palier peut être dans, ou sensiblement dans, le même plan normal à la direction longitudinale que le bord d'extrémité des parois longitudinales. Dit autrement, les extrémités concentriques de la paroi de fond sont dans le même plan, ou sensiblement dans le même plan. Par « sensiblement dans le même plan », on entend que la distance entre ces plans normaux à la direction longitudinale est inférieure à 25% d'un diamètre du carter.

Prévoir un palier dans le même plan que le bord d'extrémité des parois longitudinales, ou sensiblement dans ce plan, peut permettre de concevoir des nervures avec des profondeurs relativement faibles, et donc un carter relativement compact.

Il est connu, dans l'état de la technique, d'avoir un palier déporté longitudinalement vers l'intérieur du logement défini par le carter, ou bien encore vers l'extérieur. Dans ces derniers cas, les nervures peuvent alors être relativement profondes, dans la mesure où elles s'étendent jusqu'au palier.

Dans un mode de réalisation avantageux, la paroi de fond peut définir des ouvertures, ce qui peut permettre une meilleure circulation de l'air. Ces ouvertures peuvent par exemple s'étendre radialement, par exemple entre le palier et les parois longitudinales, et s'étendre sur une plage angulaire donnée, par exemple de l'ordre de 20°.

Dans un mode de réalisation avantageux, au moins une nervure est situé contre un bord d'une ouverture. Les nervures sont ainsi disposées aux emplacements les plus fragiles. Bien entendu, on pourrait alternativement prévoir de disposer les nervures à distance des bords des parties pleines de la paroi de fond.

Dans un mode de réalisation avantageux, la paroi de fond peut être bombée de façon concave, c'est-à-dire que le maximum, suivant la direction longitudinale, de la paroi de fond, est davantage vers l'extérieur du carter que le bord d'extrémité des parois longitudinales et/ou que le palier.

Alternativement, on peut bien entendu prévoir que la paroi de fond soit convexe, c'est-à-dire courbée vers l'intérieur du logement.

Dans un mode de réalisation avantageux, le carter est réalisé en aluminium, par exemple par moulage ou autre.

Alternativement, on pourrait prévoir un carter réalisé en un autre matériau, par exemple en fonte ou autre. Le bombage pourra être fonction de la rigidité du matériau et de l'épaisseur de la paroi de fond.

Le palier peut être à roulement, ou autre.

Par « bord d'extrémité des parois longitudinales », on entend la jonction entre les parois longitudinales et la paroi de fond. Dit autrement, les parois longitudinales peuvent s'étendre au-delà du bord d'extrémité.

Il est en outre proposé un moteur de traction de véhicule automobile comprenant un stator et un carter tel que décrit ci-dessus pour recevoir un rotor, par exemple un moteur électrique.

Il est en outre proposé un véhicule automobile comprenant un carter tel que décrit ci-dessus et/un moteur de traction tel que décrit ci-dessus.

L'invention sera mieux comprise en référence aux figures, lesquelles illustrent des modes de réalisation donnés à titre d'exemple et non limitatifs.
La figure 1 montre schématiquement une section d'un exemple d'extrémité de carter du type connu de l'art antérieur.
La figure 2 montre schématiquement une section d'un exemple d'extrémité de carter selon un mode de réalisation de l'invention.
La figure 3 est une vue en coupe d'un exemple d'extrémité de carter selon un mode de réalisation de l'invention.
La figure 4 montre schématiquement une section d'un exemple d'extrémité de carter selon un exemple connu dans l'état de la technique, seule la partie supérieure étant ici représentée.
La figure 5 montre un exemple de carter selon un mode de réalisation de l'invention, vu de l'intérieur.
La figure 6 est une autre vue de cet exemple de carter, vu de l'extérieur.

Des références identiques pourront être utilisées d'une figure à l'autre pour désigner des éléments identiques ou similaires dans leur forme ou dans leur fonction.

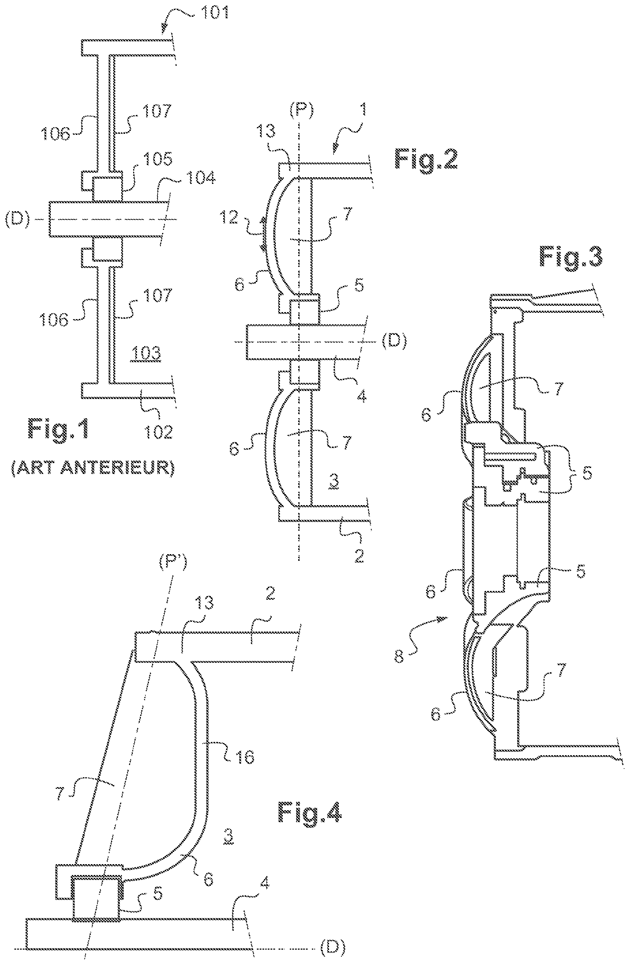

En référence à la figure 1, un carter 101 du type connu de l'art antérieur comprend des parois longitudinales 102 définissant un logement 103 pour recevoir un stator et un rotor d'un moteur électrique (parties actives du moteur) dont seul l'axe 104 est ici représenté.

Le carter 101 comprend un palier 105 pour recevoir cet axe 104, ainsi qu'une paroi de fond 106 s'étendant entre le palier 105 et des bords d'extrémité des parois longitudinales 101.

La paroi de fond 106 définit des nervures 107.

La paroi de fond 106 est plane entre les parois longitudinales 102 et le palier 105. La profondeur des nervures 107 est constante sur tout le rayon entre le palier et le bord d'extrémité des parois longitudinales 101.

Lorsque l'axe 104 est entraîné en rotation, le carter peut être amené à vibrer, et le rotor peut subir des déplacements oscillatoires le long de l'axe longitudinal (D).

En référence à la figure 2, un carter 1 selon un mode de réalisation de l'invention comprend des parois longitudinales 2, définissant avec une paroi de fond 6, un logement 3 pour recevoir un stator et un rotor dont seul l'axe 4 est visible sur cette figure 2.

Un palier 5, ici un palier à roulement, permet de supporter le rotor dont l'axe 4 est en rotation le long de l'axe longitudinal (D).

Le palier 5 est ici sensiblement dans le même plan transverse (P) que l'extrémité des parois transverse 2 que le bord d'extrémité 13 des parois longitudinales 2.

La paroi de fond 6 est bombée, ici de façon concave, c'est à-dire vers l'extérieur du carter 1, entre les parois longitudinales 2 et le palier 5.

Des nervures 7 sont définies entre les parois longitudinales 2 et le palier 5, ces nervures 7 étant relativement profondes du fait du bombage de la paroi de fond 6. Ces nervures s'étendent longitudinalement entre un bord rectiligne, dans un plan parallèle au plan (P), et un bord formant jonction avec une surface interne bombée de la paroi de fond 6.

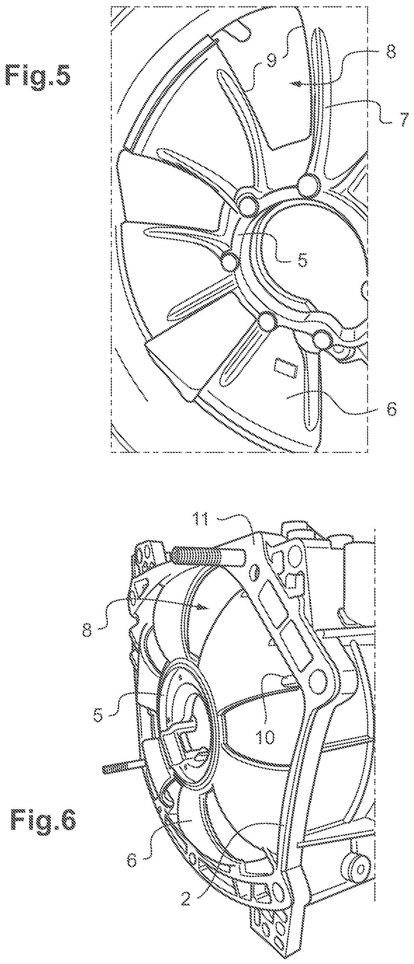

Les figures 3, 5 et 6 sont relatives à un même mode de réalisation et seront commentées simultanément. Dans ce mode de réalisation, la paroi de fond 6 définit les ouvertures 8 radiales s'étendant entre le palier 5 et le bord d'extrémité des parois longitudinales 2. Ces ouvertures permettent el refroidissement des parties actives du moteur électrique.

Dans ce mode de réalisation, les nervures 7 sont disposées à proximité des bords radiaux 9 des ouvertures 8.

Les nervures 7 s'étendent jusqu'au palier 5, mais sur une partie seulement du rayon de la paroi de fond. Dit autrement, les nervures 7 n'atteignent pas directement, dans ce mode de réalisation, les parois longitudinales 2.

La paroi de fond définit en outre des renforcements externes radiaux 10 pour assurer un meilleur maintien d'une banquette 11 à la périphérie externe de la paroi de fond.

Dans les modes de réalisation des figures 2, 3, 5 et 6, la toile de fond de carter est concave. Le carter définit un renfoncement central, c'est-à-dire que le maximum 12 de la surface bombée de la paroi de fond 6 est atteint entre les parois longitudinales 2 et le palier 5. Ce bombage, avec un renfoncement central autour du palier de roulement du rotor permet, avec les renforcements internes radiaux 7, d'assurer une bonne résistance aux vibrations de l'axe 4. On peut ainsi limiter les déformations du palier de carter lorsque ces vibrations sont à relativement hautes fréquences (mode dit de pompage). Les nervures se prolongent jusqu'au palier, permettant ainsi une meilleure absorption des vibrations.

Le carter est réalisé en aluminium, par moulage.

La figure 4 correspond à un exemple connu dans l'état de la technique, dans lequel :
- Le palier 5 n'est pas dans le même plan que le bord d'extrémité 13 des parois longitudinales 2,
- La paroi de fond 6 est convexe et,
- La paroi de fond définit une portion 16 plane pour limiter l'encombrement interne du moteur.

En effet, dans cet exemple connu le palier de roulement 5 est légèrement déporté vers l'extérieur, c'est-à-dire qu'un plan P' passant par le roulement 5 et le bord d'extrémité 12 des parois longitudinales 2, dans le plan de la coupe de la figure 4 et pour la moitié supérieure représentée, est oblique.

Dans ce cas, les nervures 7 peuvent être plus profondes que dans le mode de réalisation dans lequel le plan passant par le palier et passant par la jonction entre les parois longitudinales 2 et la paroi de fond 6 est sensiblement perpendiculaire à l'axe longitudinal (D).

Dans cet exemple connu, le palier est légèrement déporté vers l'extérieur par rapport au logement 3. Néanmoins, on pourrait prévoir un palier vers l'intérieur.

En outre, dans cet exemple connu, une partie seulement de la paroi de fond 6 est bombée, pour limiter l'encombrement interne du moteur, étant entendu qu'on peut prévoir des variantes dans lesquelles la paroi de fond 6 est totalement bombée. La paroi de fond 6 définit une portion plane 16. La nervure 7 s'étend dans cet exemple connu depuis les parois longitudinales 2 jusqu'au palier 5. Du fait du bombage et de la position du palier, les nervures 7 ont une profondeur variant radialement.

Les figures montrent seulement une extrémité du carter, l'autre extrémité de carter, de l'autre côté du rotor, pouvant être semblable aux extrémités représentées, c'est-à-dire avec une paroi de fond bombée, et des nervures s'étendant jusqu'au palier, ou non. Dit autrement, le carter peut comprendre une ou deux parois de fond bombées et supportant l'axe du rotor avec des nervures s'étendant jusqu'à la liaison avec le rotor.

Dans un mode de réalisation non représenté, on pourrait prévoir d'ajouter des nervures circulaires à ces nervures radiales.

## Revendications

1. Carter (1) pour moteur de traction de véhicule automobile comprenant :
des parois longitudinales (2) définissant un logement (3) s'étendant longitudinalement pour recevoir un stator et un rotor du moteur,
au moins un palier (5) pour supporter un axe (4) du rotor, ledit axe s'étendant longitudinalement dans le logement, et
au moins une paroi de fond (6) s'étendant entre un bord d'extrémité (13) des parois longitudinales et le palier, le bord d'extrémité (13) définissant la jonction entre les parois longitudinales (2) et la paroi de fond (6), dans lequel
la paroi de fond définit des nervures (7) s'étendant suivant une composante radiale jusqu'au palier, la paroi de fond (6) définissant un renfoncement central au niveau du palier (5),
où le bord d'extrémité (13) des parois longitudinales (2) est circonscrit dans un seul plan (P) normal à la direction longitudinale, le palier (5) étant dans, ou sensiblement dans, le même plan normal à la direction longitudinale que le bord d'extrémité des parois longitudinales,
**caractérisé en ce que**
la paroi de fond (6) est bombée entre d'une part le bord d'extrémité (13) des parois longitudinales (2) et d'autre part le palier (5).

2. Carter (1) selon la revendication 1, dans lequel la paroi de fond (6) définit des ouvertures (8).

3. Carter (1) selon la revendication 2, dans lequel au moins une nervure (7) est située contre un bord (9) d'une ouverture (8).

4. Carter (1) selon l'une quelconque des revendications 1 à 3, dans lequel la paroi de fond (6) est concave.

5. Carter (1) selon l'une quelconque des revendications 1 à 4, ledit carter étant réalisé en aluminium.

6. Carter (1) selon l'une quelconque des revendications 1 à 5,
dans lequel les nervures s'étendent entre une extrémité centrale au niveau du palier et une extrémité périphérique séparée du centre de l'axe (3) d'une distance comprise entre 60% et 100%, avantageusement entre 75% et 100%, de la distance entre le centre de l'axe (3) et le bord d'extrémité (13) des parois longitudinales.

7. Carter (1) selon l'une quelconque des revendications 1 à 6,
dans lequel la paroi de fond est bordée à sa périphérie externe par une banquette (11),
caractérisé en que ce
la paroi de fond définit des renforcements externes radiaux (10) pour assurer un meilleur maintien de la banquette.

8. Moteur de traction de véhicule automobile comprenant un stator et un carter selon l'une quelconque des revendications 1 à 7.

9. Véhicule automobile comprenant un moteur de traction selon la revendication 8.

## Patentansprüche

1. Gehäuse (1) für einen Antriebsmotor eines Kraftfahrzeugs, aufweisend:
longitudinale Wände (2), welche eine Aufnahme (3) definieren, welche sich longitudinal erstreckt, um einen Stator und einen Rotor des Motors aufzunehmen,
mindestens ein Lager (5), um eine Achse (4) des Rotors zu stützen, wobei sich die Achse in der Aufnahme longitudinal erstreckt, und
mindestens eine Bodenwand (6), welche sich zwischen einem Endrand (13) der longitudinalen Wände und dem Lager erstreckt, wobei der Endrand (13) die Schnittstelle zwischen den longitudinalen Wänden (2) und der Bodenwand (6) definieren,
bei welchem
die Bodenwand Rippen (7) definiert, welche sich gemäß einer radialen Komponente bis zu dem Lager erstrecken, die Bodenwand (6) eine zentrale Aussparung auf Höhe des Lagers (5) definiert, wo der Endrand (13) der longitudinalen Wände (2) von einer einzigen Ebene (P) senkrecht zu der longitudinalen Richtung umgrenzt ist, wobei sich das Lager (5) in oder im Wesentlichen in der gleichen Ebene senkrecht zu der longitudinalen Richtung wie der Endrand der longitudinalen Wände befindet, **dadurch gekennzeichnet, dass**
die Bodenwand (6) zwischen einerseits der Endkante (13) der longitudinalen Wände (2) und andererseits dem Lager (5) gewölbt ist.

2. Gehäuse (1) nach Anspruch 1, bei welchem die Bodenwand (6) Öffnungen (8) definiert.

3. Gehäuse (1) nach Anspruch 2, bei welchem mindestens eine Rippe (7) an einem Rand (9) einer Öffnung (8) angeordnet ist.

4. Gehäuse (1) nach einem der vorhergehenden Ansprüche 1 bis 3, bei welchem die Bodenwand (6) konkav ist.

5. Gehäuse (1) nach einem der Ansprüche 1 bis 4, bei welchem das Gehäuse aus Aluminium ausgeführt ist.

6. Gehäuse (1) nach einem der Ansprüche 1 bis 5,
bei welchem sich die Rippen zwischen einem zentralen Ende auf Höhe des Lagers und einem peripheren Ende erstrecken, welches von der Mitte der Achse (3) durch einen Abstand getrennt ist, welcher zwischen 60% und 100%, Vorteilhafterweise zwischen 75% und 100%, des Abstands zwischen der Mitte der Achse (3) und dem Endrand (13) der longitudinalen Wände liegt.

7. Gehäuse (1) nach einem der Ansprüche 1 bis 6,
bei welchem die Bodenwand an ihrem Umfang durch einen Sitz (11) umrandet ist,
**dadurch gekennzeichnet, dass**
die Bodenwand radiale, äußere Verstärkung (10) definiert, um einen besseren Halt des Sitzes zu gewährleisten.

8. Antriebsmotor eines Kraftfahrzeugs, welcher einen Stator und ein Gehäuse nach einem der Ansprüche 1 bis 7 aufweist.

9. Kraftfahrzeug, welches einen Antriebsmotor nach Anspruch 8 aufweist.

## Claims

1. Casing (1) for a motor vehicle traction motor, comprising:
longitudinal walls (2) that define a longitudinally extending housing (3) for receiving a stator and a rotor of the motor,
at least one bearing (5) for supporting a shaft (4) of the rotor, said shaft extending longitudinally in the housing, and
at least one bottom wall (6) that extends between an end edge (13) of the longitudinal walls and the bearing, the end edge (13) defining the join between the longitudinal walls (2) and the bottom wall (6),
wherein
the bottom wall defines ribs (7) that extend along a radial component as far as the bearing, the bottom wall (6) defining a central indentation at the bearing (5), where the end edge (13) of the longitudinal walls (2) is circumscribed in a single plane (P) normal to the longitudinal direction, the bearing (5) being in, or substantially in, the same plane normal to the longitudinal direction as the end edge of the longitudinal walls,
**characterized in that**
the bottom wall (6) is curved between the end edge (13) of the longitudinal walls (2) on one side and the bearing (5) on the other side.

2. Casing (1) according to Claim 1, wherein the bottom wall (6) defines openings (8).

3. Casing (1) according to Claim 2, wherein at least one rib (7) is situated against an edge (9) of an opening (8) .

4. Casing (1) according to any one of Claims 1 to 3, wherein the bottom wall (6) is concave.

5. Casing (1) according to any one of Claims 1 to 4, said casing being made of aluminium.

6. Casing (1) according to any one of Claims 1 to 5, wherein the ribs extend between a central end at the bearing and a peripheral end separated from the centre of the shaft (3) by a distance of between 60% and 100%, advantageously between 75% and 100%, of the distance between the centre of the shaft (3) and the end edge (13) of the longitudinal walls.

7. Casing (1) according to any one of Claims 1 to 6, wherein the bottom wall is bordered at its external periphery by a seat (11),
**characterized in that**
the bottom wall defines radial external reinforcements (10) to ensure better holding of the seat.

8. Motor vehicle traction motor comprising a stator and a casing according to any one of Claims 1 to 7.

9. Motor vehicle comprising a traction motor according to Claim 8.
